Europäisches Patentamt

**European Patent Office**

Office européen des brevets

(11) Publication number: **0 148 850**
**B1**

# EUROPEAN PATENT SPECIFICATION

(45) Date of publication of patent specification: **12.08.87**

(21) Application number: **84901812.2**

(22) Date of filing: **25.04.84**

(86) International application number:
**PCT/NO84/00021**

(87) International publication number:
**WO 84/04290 08.11.84 Gazette 84/26**

(51) Int. Cl.⁴: **B 65 H 55/00, H 02 G 1/18**

(54) METHOD FOR MAKING PACKAGE OF ELECTRICAL HEATING CABLE.

(30) Priority: **27.04.83 NO 831480**

(43) Date of publication of application:
**24.07.85 Bulletin 85/30**

(45) Publication of the grant of the patent:
**12.08.87 Bulletin 87/33**

(84) Designated Contracting States:
**AT DE FR GB SE**

(56) References cited:
**CH-A- 358 133**
**SE-C- 105 983**
**US-A-2 565 339**
**US-A-3 550 267**
**US-A-3 612 429**

(73) Proprietor: **STANDARD TELEFON OG KABELFABRIK A/S**
**Postboks 60 Okern**
**N-0508 Oslo 5 (NO)**

(72) Inventor: **HOLTE, Thor Asbjorn**
**Dr. Dedichens vei 35**
**N-0673 Oslo 6 (NO)**
Inventor: **EGE, Sigmund**
**Theodor Lovstads vei 50**
**N-0286 Oslo 2 (NO)**
Inventor: **PEDERSEN, Jack, Raymond**
**Festeveien 8**
**N-1500 Moss (NO)**

(74) Representative: **Larsson, Sten**
**Flygt AB Box 1309**
**S-171 25 Solna (SE)**

Courier Press, Leamington Spa, England.

## Description

The present invention relates to a method for making a package and installation of predetermined lengths of single conductor electrical cables and in particular electrical heating cables. Such cables are usually provided with sheaths of lead.

There are previously known a large number of methods and means for winding elongated articles in coils and on reels, and the usual procedure is that one starts out from one end of the elongated article and finishes off with the other end. US—A—3 550 267 shows a method to manufacture a heating element comprising a non-insulated heating wire connected to cold insulated wires in an installation cable. When installing such an elongated article, as e.g. a cable, an electrician starts out from the latter end and continues dewinding until the former end appears. This is also done with electrical heating cable.

The main features of the present invention are defined in the accompanying claims. With the invention there is obtained a cable package which greatly simplifies installation of single conductors electrical heating cable.

In order to give a clearer understanding of the present invention it is referred to the following detailed description and to the accompanying drawings, where

— Figs. 1—3 schematically illustrate three ways of installing heating cables,

— Figs. 4—5 schematically show a cable, packaged in a coil, and

— Figs. 6—10 schematically show a principle of the method for packaging cable lengths in accordance with the present invention.

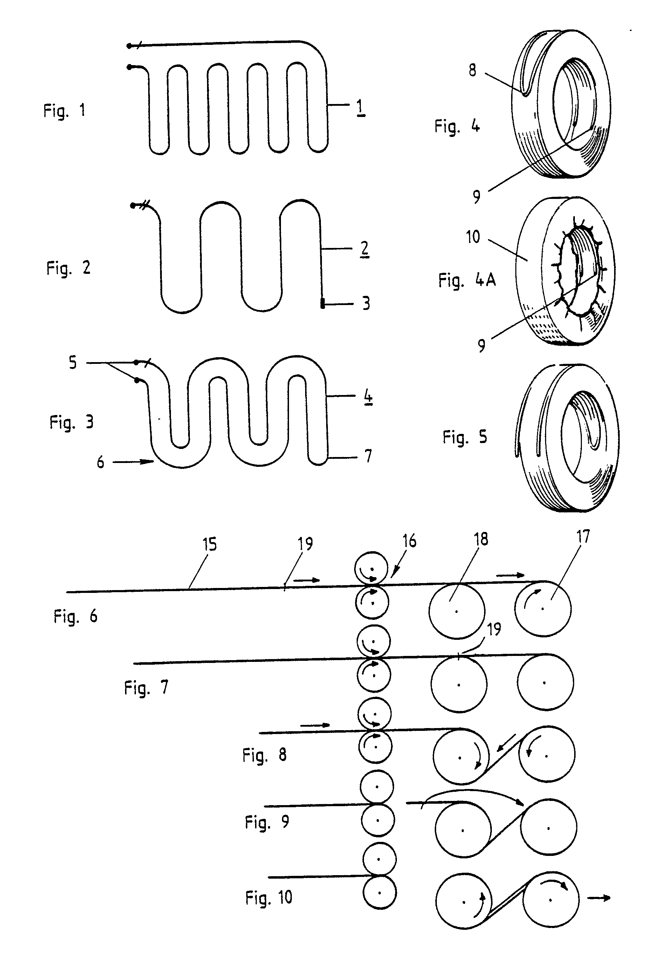

In Figs. 1—3 are schematically illustrated three different methods of installing heating cables to cover a certain area. In Fig. 1 is shown the usual way of installing a single conductor cable 1, while in Fig. 2 is shown the usual way of isntalling a two conductor heating cable 2. The single conductor cable is installed by starting out from the available end of the cable, paying out the cable in desired meander pattern and returning to the starting place where both ends are connected to a power supply such as the mains. The two-conductor cable consists of two insulated resistance wires which run in parallel within a common protective sheath. The two wires are jointed to a return conductor at the far end 3 and the installation is simplified because the cable is shorter than the single conductor cable. The heat distribution with this type of cable is, however, not so good.

In Fig. 3 is illustrated how the cable package of the present invention may be utilized to combine the good heat distribution which is obtained with installation in accordance with Fig. 1 with the simplified installation shown in Fig. 2. The single conductor cable 4 which is packaged in the mentioned manner may then be installed by starting with the two cable ends 5 (it may for example be a cable with cold ends) at a power supply junction box. It will be advantageous to clamp the ends at this place so that the cable parts easily may be insalled in parallel to the first turning place 6 in the pattern (e.g. meander pattern) to be made. At this place the cable parts are also clamped a desired distance from each other, and the cable parts are thereafter installed in this procedure until the installation is completed with the bight 7. With a little practicing it will probably be possible to obtain the desired meander pattern without making adjustments. The package may be handled manually or it may be placed in a dewinding apparatus.

In Fig. 4 is schematically illustrated how a cable may be packaged with the bight 8 outermost and the ends 9 innermost in accordance with the present invention. A wrapping 10 may be placed around the coil as illustrated in Fig. 4A, or the coil may be placed in a box or container. In Fig. 5 is illustrated a coil where the bight is placed innermost.

It is considered advantageous to pack the cable with the bight outermost so that the installation may start with the two ends from within the coil. It is known in connection with packaging of ordinary cable like installation cable, and also heating cable, that it is desirable to start inside the coil when paying out the cable. The coil will then maintain its form better during the pay out and installation. In certain instances it may, however, be desirable to be able to start from the outside. In these instances it will in accordance with the invention be necessary to place the bight innermost in the coil with the ends outermost.

There may be alternative ways of making the desired coil, but the preferable methods are described in connection with Figures 6—10.

In order to be able to wind a cable into a coil there may be used an arrangement as illustrated in Figs. 6—10, and which operates in three or more stages. A cable 15 is shown to be moved lengthwise to the right in all Figures 6—10. A feeding and length measuring unit 16 feeds the cable 15 onto a take-up reel 17. (This reel could alternatively be a suitable container, or it could in the preferred embodiment be exchanged with a coil winding machine) until the midpoint 19 of the cable section is detected. Alternatively the midpoint could be marked in a previous process so as to facilitate its detection.

When the midpoint 19 reaches the position of a reel or coil winding arrangement 18 (Fig. 7) the cable is pressed or guided by means not shown, into a slot or other catching arrangement in the reel 18 or in the alternative coil winding machine. This situation is illustrated in Fig. 7, and the winding arrangement 17 is then brought to a preliminary stand-still.

One may now proceed in two ways. The preferable way will be, in order to make a coil with the bight outermost and the ends innermost, to wind the two cable ends preliminarily on the reel 18, — one part of the cable being supplied via the unit 16 and the other from the winding arrangement 17. This is illustrated in Fig. 8. Thereafter, the "left" hand end of the cable 15 is hooked onto the coil winding arrangement 17 (Fig. 9), whereafter the cable is wound to a coil at this place (Fig. 10).

Alternatively, in order to make a coil with the bight innermost and the ends outermost, the reel 18 will be exchanged with a coil winding arrangement. In Fig. 8 one part of the cable will then be supplied from the left hand side via the unit 16 and the other part is supplied or paid out from the reel 17 so that at 18 to obtain a cable package in accordance with the present invention.

## Claims

1. Method for making a package and installation of predetermined lengths of single conductor electrical heating cable (15) of the type having "cold" ends with continuous insulation and possible other continuous protecting layers, such as lead sheath over the whole length of cable, characterized in, that each predetermined length of cable (15) is supplied from a cable supply, that about one half of the cable length is accumulated and stored temporarily on a reel, in a container or in a coil winding machine (17), that the approximate midpoint (19) of the cable length (15) is gripped, that a bight is formed on the cable (15) at the midpoint (19), that the bight (19) is hooked onto a second reel or coil winding machine (18), that the two parts of cable (15), one from the original cable supply and one from the temporary cable supply (17), are wound onto the second reel or coil winding machine (18) until both ends of the cable are available and, possibly, that both cable ends together are wound from the reel (18) on the coilwinding machine (17), thus forming a self contained coil of cable.

2. Method according to claim 1, characterized in, that the cable is coiled on the coil winding machine (17) with the ends innermost and the bight outermost.

3. Method according to claim 1, characterized in, that the cable is coiled on the coil winding machine (18) with the bight innermost and the ends outermost.

## Patentansprüche

1. Verfahren zum Bündeln und Verlegen von Einleiter-Heizkabelstücken (15) vorgegebener Länge und mit "kalten" Enden sowie sich über die gesamte Länge erstreckenden Isolier- und gegebenenfalls weiteren Schutzhüllen, wie z.B. einem Bleimantel, dadurch gekennzeichnet, daß jedes Kabelstück (15) vorgegebener Länge von einer Kabelablaufvorrichtung geliefert wird, daß etwa die Hälfte des Kabelstücks auf einer Trommel, in einem Behälter oder in einer Wickelmaschine (17) zwischengespeichert wird, daß das Kabelstück (15) ungefähr in seinem Mittelpunkt (19) erfaßt wird, daß eine Schleife am Mittelpunkt (19) des Kabels (15) gebildet wird, daß die Schleife (19) in eine zweite Trommel oder Wickelmaschine (18) eingehängt wird, daß die beiden Teile des Kabels (15), d.h. das von der ursprünglichen Kabelablaufvorrichtung und das von der Zwischenspeichereinrichtung (17), auf die zweite Trommel oder Wickelmaschine (18) aufgewickelt werden, bis beide Enden des Kabels erreicht sind, und daß beide Kabelenden gegebenenfalls gemeinsam von der zweiten Trommel (18) auf die Wickelmaschine (17) gewickelt werden, so daß ein selbständiger Kabelwickel entsteht.

2. Verfahren nach Anspruch 1, dadurch gekennzeichnet, daß das Kable so auf der Wickelmaschine (17) aufgewickelt wird, daß die Enden innen und die Schleife außen liegen.

3. Verfahren nach Anspruch 1, dadurch gekennzeichnet, daß das Kabel so auf der Wickelmaschine (18) aufgewickelt wird, daß die Schleife innen und die Enden außen liegen.

## Revendications

1. Procédé de conditionnement et de pose d'une longueur prédéterminée d'un câble de chauffage électrique à un seul conducteur (15) du type ayant des extrémités "froides" et un isolement continu accompagné éventuellement d'autres couches de protection, telles qu'un blindage au plomb sur toute la longueur du câble, caractérisé en ce que: chaque longueur de câble prédéterminée (15) est dévidée d'un touret d'alimentation; la moitié de la longueur de câble environ est accumulée et stockée temporairement sur une bobine, dans un conteneur ou dans une machine à enrouler (17); le point central (19), approximativement, de la longueur de câble (15) est saisi, une boucle de renvoi est formée sur le câble (15) au point central (19); le renvoi (19) est fixée sur une deuxième bobine ou machine à enrouler (18); les deux parties de câble (15), l'une de l'alimentation en câble d'origine et l'autre du stockage de câble temporaire (17), sont enroulées sur la deuxième bobine ou machine à enrouler (18), jusqu'à ce que les deux extrémités de câble soient accessibles; et, éventuellement, les deux extrémités de câble sont enroulées ensemble de la bobine (18) sur la machine à enrouler (17), pour former ainsi une bobine de câble "en l'air".

2. Procédé selon la revendication 1, caractérisé en ce que le câble est enroulé sur la machine à enrouler (17) avec les extrémités à l'intérieur et le renvoi à l'extérieur.

3. Procédé selon la revendication 1, caractérisé en ce que le câble est enroulé sur la machine à enrouler (18) avec le renvoi à l'intérieur et les extrémités à l'extérieur.

Fig. 1

Fig. 2

Fig. 3

Fig. 4

Fig. 4A

Fig. 5

Fig. 6

Fig. 7

Fig. 8

Fig. 9

Fig. 10